# EUROPEAN PATENT SPECIFICATION

(11) **EP 2 017 407 B1**
(45) Date of publication and mention of the grant of the patent: **10.02.2016**
(21) Application number: 08252474.5
(22) Date of filing: 21.07.2008
(51) Int. Cl.: E05B 9/08, E05C 3/04

(54) **A lock assembly**
Verriegelungsanordnung
Ensemble de verrouillage

(30) Priority: 20.07.2007 GB 0714153
(43) Date of publication of application: 21.01.2009
(73) Proprietor: Container Components Europe Ltd., Holmewood Industrial Park Chesterfield, S42 5UX (GB)
(72) Inventor: Holmes, Michael David, Chesterfield Derbyshire, S43 3EQ (GB)
(74) Representative: Potter Clarkson LLP

(56) References cited:
- EP-A1- 0 025 472
- FR-A1- 2 787 489
- FR-A3- 2 886 359
- US-A- 3 693 685

## Description

This invention relates to a lock assembly, and to a nut forming part of a lock assembly. The invention relates particularly, but not exclusively, to a lock assembly adapted to be fitted to a closure made of a plastics material. However, it is to be understood that the lock assembly of the present invention could be fitted in other closures.

A problem with existing locks that are adapted to be fitted to, for example, a lid for a container, is that the lock may become accidentally undone through use of the lock, and then fall out of the lid into the container. This occurs because it is possible to both tighten and untighten a nut securing a known lock to the lid by hand. In other words, a relatively low force is required to both tighten and untighten the nut securing the known lock to a lid. This means that through use, the nut may accidentally loosen resulting in the lock falling out of the lid, and into the container, for example.

European patent application No. EP 0025472 A discloses a fastening nut to fasten closures consisting of a metal for switch cabinet doors, in which the closure that is passed through a metal panel is earthed by electrical contact with the metal panel characterised in that the fastening nut is at the same time an earthing nut, that both lateral surfaces of the fastening nut are provided with teeth that are sharp in the direction of tightening with their point projecting above the contact surface, for the purpose of scraping off non-conducting layers, more particularly layers of paint and oxide, on the metal panel, in order to create an electrical contact between the lateral contact surface of the fastening nut and the metal panel and thereby to render separate earthing measures unnecessary, each tooth being of smaller width than the cross-sectional width of the contact surface of the fastening nut.

According to the present invention there is provided a lock assembly comprising:
a lock comprising:
   a barrel;
   a locking mechanism; and
   a head;
a support adapted to receive the lock, such that, in use, the support is positioned between the head and the locking mechanism;
a nut threadingly engageable with the barrel, such that tightening of the nut along the barrel causes the nut to engage with the support to thereby hold the lock in place relative to the support;
characterised in that the support is resiliently deformable and comprises a protrusion extending from the support; and the nut comprises a detent engageable with the protrusion.

Preferably, the detent provides greater resistance to movement of the nut in a first sense than to movement of a nut in an opposite sense. The nut of the lock assembly may thus be more easily threaded onto the barrel in one sense than in another sense.

Preferably, the detent provides greater resistance to movement of the nut in an anti-clockwise direction than in a clockwise direction. This means that the nut may be screwed onto the barrel by turning the nut in a clockwise direction more easily than the nut may be unthreaded from the barrel by turning the nut in an anti-clockwise direction. By means of the present invention, therefore, it is possible to tighten the nut by hand in order to secure the lock to the support, but it is not possible to loosen the nut by hand. Instead, it is necessary to use a tool such as a spanner in order to loosen the nut from the barrel in order to remove the lock from the support.

This means that during use of the lock assembly, unintentional loosening of the nut is unlikely to happen, thus reducing the chances that the lock may become accidentally loosened, and thus become detached from the support.

The barrel may be threaded along its length, or alternatively, the barrel may comprise a threaded portion and a non-threaded portion.

Because the support is resiliently deformable, the protrusion formed on the support may ride over the detent when the nut is being screwed onto, or unscrewed from, the barrel due to the resilience of the support.

The resistance to movement of the nut provided by the detent will depend upon the material from which the support is formed, and hence the degree of resilience of the support, and also on the relative dimensions of the protrusion, the detent.

Conveniently, the detent comprises a cam, and the protrusion comprises a cam follower.

The cam is shaped such that it is easier for the protrusion to ride over the cam when the nut is being screwed onto the barrel, than when the nut is being unscrewed from the barrel.

Alternatively, the detent comprises a ramp extending from a surface of the nut. In use, when the nut is threadingly engaged with the barrel, the ramp will extend towards the surface, and the protrusion formed on the surface will extend towards the nut. The ramp comprises a sloping surface, and an upright surface extending substantially at right angles to a face of the nut.

The nut is screwed along the barrel in order to secure the lock in place on the support.

When the nut is first introduced onto the barrel in order to tighten the lock and secure the lock in place on the support, the distance between the nut and the support is such that when the nut is rotated in a clockwise manner in order to screw the nut onto the barrel, the ramp does not make contact with the protrusion.

As the nut is screwed further onto the barrel, the nut will reach a position relative to the support in which detent formed on the nut makes contact with the detent formed on the nut.

The ramp is shaped such that as the nut is rotated in a clockwise sense, the protrusion will initially come into contact with the slope of the ramp. As the nut is turned further in a clockwise direction the protrusion will ride up along the slope of the ramp. The protrusion is able to ride up along the slope because the support is formed from a resiliently deformable material. This means that as the nut continues to be rotated in a clockwise direction, the support will deform in order to allow the protrusion to ride up the slope of the ramp to the top of the slope. At this point further rotational movement of the nut in a clockwise direction will result in the protrusion passing over the highest part of ramp and thus disengaging from the ramp, returning the support to its substantially non-deformed state. Once the protrusion has passed over the ramp, the resiliently deformable support will thus return to its original position, and further rotation of the nut may take place. Every time the protrusion makes contact with the ramp the support will deform to allow the protrusion to ride up the ramp so that the nut may continue to be turned.

The terms "upper", "lower" and similar terms used to describe the ramp are used with reference to the surface of the nut from which the ramp extends, and do not imply that the nut is in any particular orientation. In other words, when the ramp is described as having a "lowest part", and "bottom" and a "top" these terms are used to describe the extension of the ramp from the surface of the nut.

If it is required to loosen the nut in order to, for example, remove the lock from the support, then the nut will have to be turned in an anti-clockwise direction. When this happens, the protrusion will abut against the upright face of the ramp, and further movement in an anti-clockwise direction will not be possible unless for example a spanner is used to force the protrusion past the ramp.

In this way, it is possible to hand tighten the lock, yet it is not possible to loosen the lock by hand. This prevents, or reduces the likelihood of, the lock becoming accidentally detached from the support due to accidental loosening of the nut during use of the lock assembly.

Advantageously, the nut comprises a plurality of detents. This limits the extent to which the nut may be loosened by hand before a protrusion on the support comes into contact with one of the detents.

Preferably, the support comprises a plurality of protrusions. Such an arrangement further reduces the extent to which the nut may turn in anti-clockwise sense before being prevented from further turning through the engagement of one of the protrusions with one of the detents.

Conveniently, the lock assembly comprises three detents, which detents are substantially equi-spaced from one another.

The detents may be spaced at substantially 120° on to one another on the face of the nut relative to a centre point of the nut.

Advantageously, the lock assembly comprises two protrusions formed on the support.

In an arrangement where the lock assembly comprises three detents formed on the nut, and two protrusions formed on the support, it is possible for the nut to rotate only a small distance no greater than 60°, in an anti-clockwise direction before one of the protrusions abuts with one of the detents preventing further anti-clockwise movement unless a tool such as a spanner is used.

The protrusions formed on the support are preferably spaced diametrically opposite to one another relative to a centre point of the nut.

The support may comprise a lid of a container to be locked by the lock mechanism. Alternatively, the support may be formed separately to any such lid.

The invention will now be further described by way of example only with reference being to the accompanying drawings:
Figure 1 is a schematic representation of a lock forming part of an assembly according to an embodiment of the invention;
Figure 2 is a key for operating the lock shown in Figure 1;
Figures 3 to 6 are schematic representations of the nut forming part of the lock of Figure 1;
Figure 7 is a schematic representation of a lock adaptor for the lock shown in Figure 1;

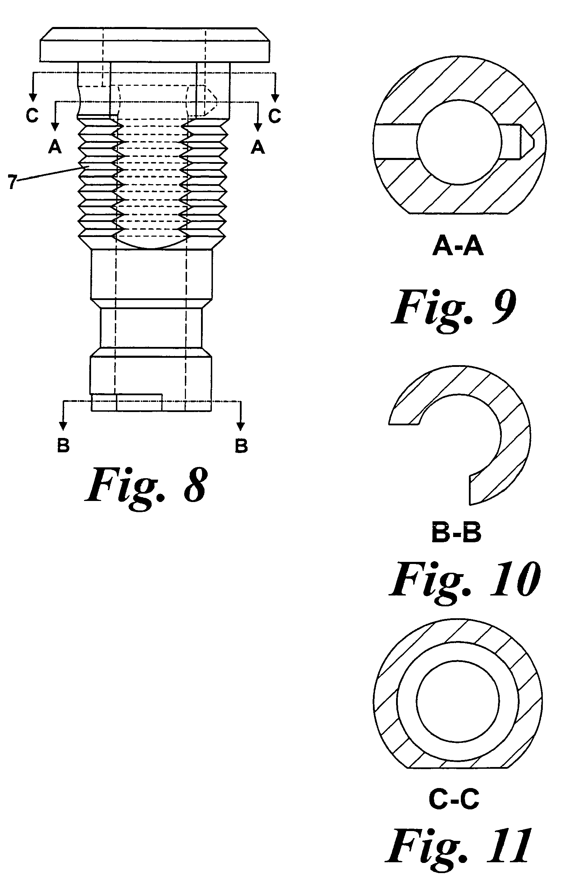

Figures 8 to 11 are schematic representations of the barrel and head of the lock assembly shown in Figure 1;
Figure 12 is a schematic representation of a spindle forming part of the lock of Figure 1;
Figure 13 is a schematic representation of a locking mechanism forming part of a lock shown in Figure 1;
Figure 14 is a schematic representation showing how the lock of Figure 1 may be fed through a lid of a container in order to be installed in the lid;
Figure 15 is a schematic representation illustrating how the nut of the lock of Figure 1 may be threaded onto the barrel of the lock once the lock is in place in for example a lid as shown in Figure 14;
Figures 16 and 17 are schematic representations showing how protrusions formed on the support abut with and may ride over detents formed on the nut.

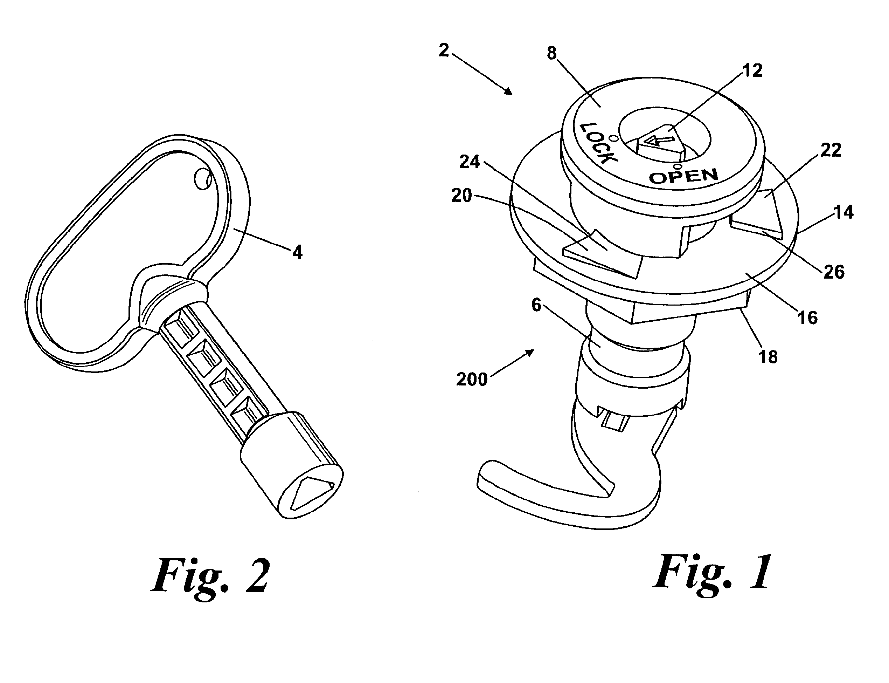

Referring to the figures, a lock according to an embodiment of the invention is designated generally by the reference numeral 2. The lock is adapted to be fitted in to, for example a lid of a container in order that the container may be closed by the lid and locked in its closed state. The lock 2 may be operated by means of a key 4 as illustrated in Figure 2.

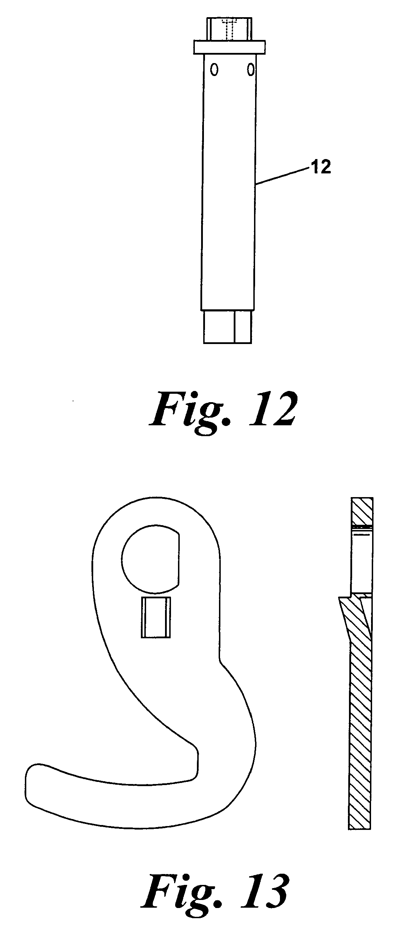

The lock 2 comprises a barrel 6, a head 8 formed at one end of the barrel 6 and a locking mechanism 10 which is in this example is in the form of a curved pawl, although other locking mechanisms such as straight pawls could also be used. The pawl is shown in more detail in Figure 12. The lock assembly 2 further comprises a spindle 12 which extends from the head 8 through the barrel to the locking mechanism 10, and is connected to the locking mechanism 10.

The lock 2 may be operated by inserting the key 4 into the head 8 of the lock in order to rotate the spindle 12. Rotation of the spindle 12 causes corresponding rotation of the locking mechanism 10 which may thus be moved between a locked position and an unlocked position in a known manner.

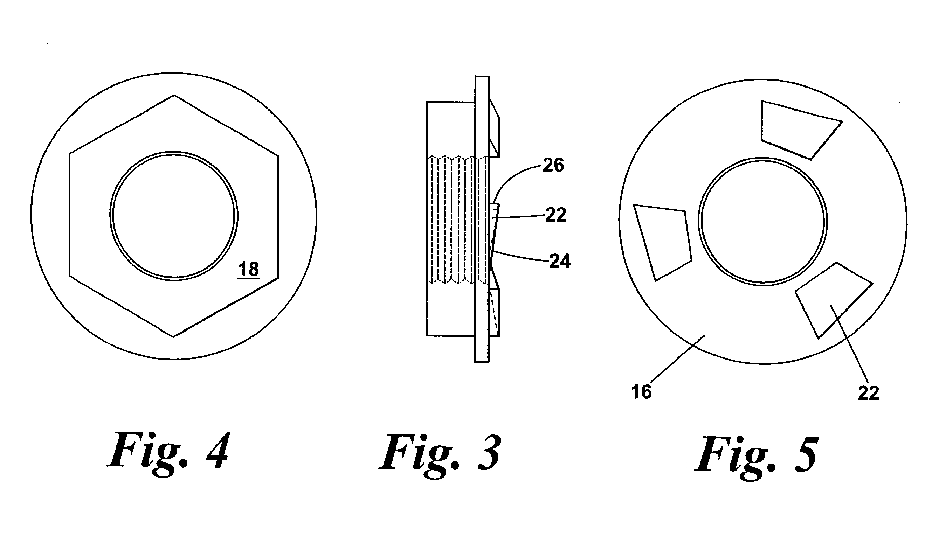

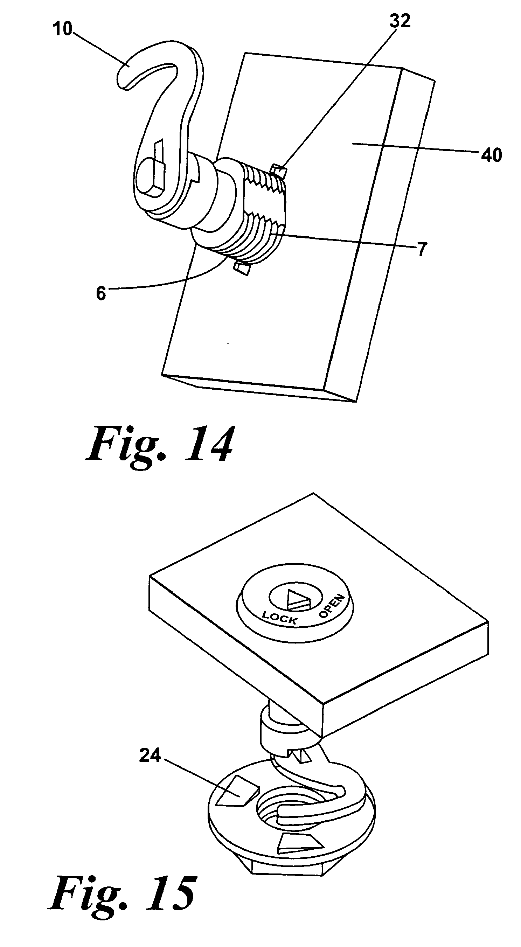

The lock forms part of a lock assembly 200 which further comprises a nut 14 shown in more detail in Figures 3 to 6. The nut is internally threaded and is adapted to threadingly engage with a threaded portion of the barrel 6 as shown particularly in Figure 15. The nut comprises a surface 16 which is substantially circular, and a body 18 which is substantially hexagonal. The nut 14 may be formed from any suitable material, and in this example is formed from polyamide or nylon.

Formed on the surface 16 of the nut is a plurality of detents 20 which in this example each comprise a ramp 22 extending from the surface 16 of the nut 14.

Each ramp 22 has a sloping face 24 that slopes upwardly from the surface 16 of the nut 14 and has an upright face 26 that extends at substantially right angles to the surface of the nut 14.

The lock assembly 200 further comprising a support 30 comprising a plurality of protrusions 32 extending from face 34 of the support 30. In use, the protrusions 32 extend towards the surface 16 of nut 14.

In this example, the support comprises a lid 31 into which the lock 2 is to be secured, although in other embodiments it could be a separate component.

The support 30 is formed from a resiliently deformable material such as a plastics material and is formed with two protrusions 32 extending from the support 30. One example of a suitable plastics material is linear low-density polyethylene (LLDPE).

In this embodiment the support is formed from a 940 polyethylene.

In use, the lock 2 will be fitted to a lid 31 of a container (forming the support 30) that the lock is intended to be able to lock in a closed position. In order to fit the lock 2 to such a lid, the barrel 6 of the lock is fed through an aperture formed in a lid 31. The nut 14 is then threaded onto the barrel 6 and threadingly engages with the threaded portion 7 of the barrel. As is well known, in order to tighten the nut 14 on the barrel 6, the nut is turned in a clockwise manner. Such clockwise movement will cause the nut to move towards the lid 40.

Initially, the nut 14 and the lid 31 are spaced apart such that there can be no contact between protrusions 32 and the detents 20 in the form of ramps formed on the surface 16 of nut 14.

As the nut is further rotated clockwise, a ramp 22 will come into contact with a protrusion 32.

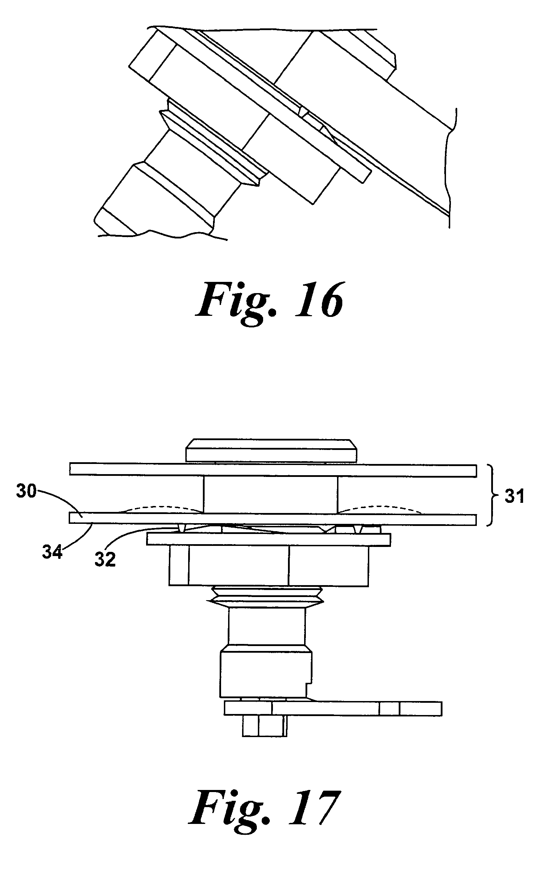

The ramps 22 are orientated such that a ramp 22 will initially make contact with a protrusion 32 at location on the slope 24 of the ramp 22. In other words, as the distance between the lid 31 and the nut 14 decreases due to the nut 14 being threaded onto the barrel 6, a ramp 22 will come into contact with a protrusion 32. The point of initial contact will depend on the distance between the lid 31 and the nut 14. In the example shown in Figure 17, the distance between the lid 31 and the nut 14 is such that the bottom of the slope of a ramp 22 will initially abut with a protrusion 32. Due to the resiliently deformable nature of the lid 31, it will be possible to continue to turn the nut in a clockwise sense. This additional further rotational movement will result in a protrusion 32 riding up the slope 24 of a ramp 22. This movement is possible because of the resilience of the lid 40 which will deform to allow the movement to take place.

Once a protrusion 32 reaches the apex of a ramp 22, further movement will cause the ramp to move past the protrusion. This will result in the lid 31 returning to its original non-deformed position. Further rotational movement of the nut 14 in a clockwise sense may take place with a protrusion 32 riding up and over a ramp 22 whenever contact is made between a ramp and a protrusion, until the distance between the lid 31 and the nut 14 is equal to the length of each protrusion 32. At this point no further movement can take place, and the nut has arrived in its tightened position in which it secures the lock 2 in place on the lid 40.

Anti-clockwise rotation of the nut 14 on the barrel will also result in a protrusion 32 coming into contact with a ramp 22. However, due to the orientation of the ramps 22 on a nut 14, the upright face of the ramp 26 will initially make contact with the protrusion 32. It is thus not possible for the protrusion to easily ride over the ramp since it will abut against the upright face 26.

This means that, if an unauthorised person attempts to unscrew the nut 14, or if forces exerted on the nut during normal use of the lock and/or a container in which it is fitted result in the nut moving in an anti-clockwise direction, such movement will be prevented when a protrusion 32 abuts with an upright face 26 of a ramp 22.

Due to the fact that each upright face 26 of each ramp 24 forms an angle of substantially 90° with the surface 16 of the nut 14, it is not possible for the protrusions 32 to easily ride over the ramps 24 due to the height of the face 26. This means that further movement which could result in the untighting of the lock assembly 2 is prevented. In other words, anti-clockwise rotation of the nut will result in a protrusion being wedged against a ramp.

If it is required to loosen the lock for whatever reason, then it will be necessary to use a spanner to force the ramps past the protrusions.

In the illustrated example each of the ramps are spaced apart from each other ramp by approximately 120° around the threaded inner section of the nut 14.

Each protrusion 32 is formed on the lid 31 such that they are orientated at approximately 180° relative to each other and relative to the threaded inner section of the nut. In such an embodiment it is not possible for both protrusions to be on a ramp at the same time. This will prevent the surface 16 of the nut 14 from flexing.

By means of the present invention therefore a user may tighten the nut by hand but will need to use a spanner in order to remove the nut from the lock.

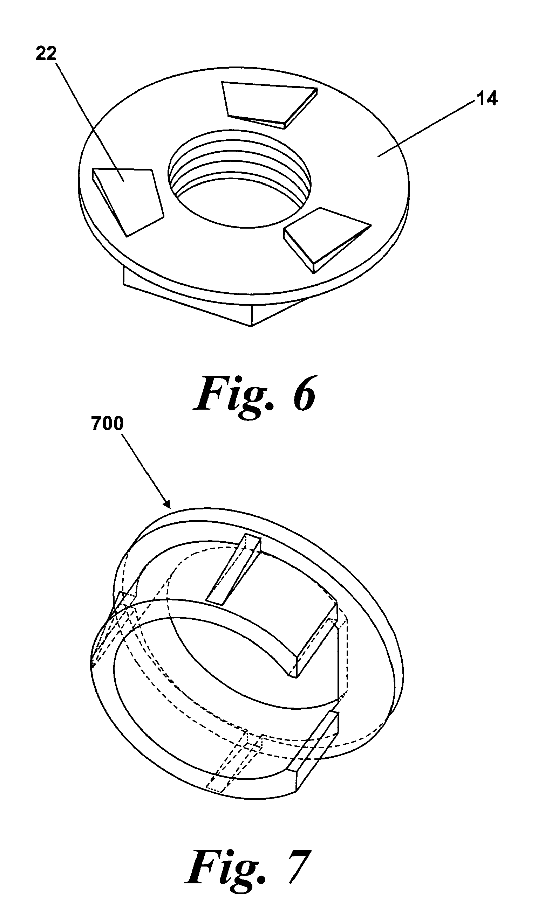

The assembly according to the present invention may further comprise a lock adapter 700 illustrated in Figure 7. The lock adapter 700 may be used to enable the lock assembly of the present invention to be fitted to a lock hole formed in, for example a lid used to close a container, which lock hole is larger than is required to accommodate the lock assembly of the present invention.

## Claims

1. A lock assembly (200) comprising:
a lock (2) comprising:
a barrel (6);
a locking mechanism (10); and
a head (8);
a support (30) adapted to receive the lock, such that, in use, the support (30) is positioned between the head (8) and the locking mechanism (10);
a nut (14) threadingly engageable with the barrel (6), such that tightening of the nut (14) along the barrel (6) causes the nut (14) to engage with the support (30) to thereby hold the lock (2) in place relative to the support (30);
**characterised in that** the support (30) is resiliently deformable and comprises a protrusion (32) extending from the support (30);
and the nut (14) comprises a detent (20) engageable with the protrusion (32).

2. A lock assembly (200) according to Claim 1 wherein the detent (20) provides greater resistance to movement of the nut (14) in a first sense than in an opposite sense.

3. A lock assembly (200) according to any one of the preceding claims wherein; the detent (20) comprises a cam and the protrusion (32) comprises a cam follower.

4. A lock assembly (200) according to any one of the preceding claims wherein the detent (20) comprises a ramp (22) extending from a surface (16) of the nut (14).

5. A lock assembly (200) according to any one of the preceding claims comprising a plurality of protrusions (32).

6. A lock assembly (200) according to any one of the preceding claims comprising a plurality of detents (20).

7. A lock assembly (200) according to any one of the preceding claims comprising three detents (20) equi-spaced apart from one another.

8. A lock assembly according to any one of the preceding claims wherein the support (30) comprises two protrusions (32) spaced apart from one another by a distance that is less than the diameter of the nut (14), which protrusions (32) are positions substantially diametrically opposite one another.

## Patentansprüche

1. Schlossanordnung (200), Folgendes umfassend:
ein Schloss (2), Folgendes umfassend:
einen Zylinder (6);
einen Schließmechanismus (10); und
einen Kopf (8);
eine Basis (30), angepasst, um das Schloss derart aufzunehmen, dass die Basis (30) im Gebrauch zwischen dem Kopf (8) und dem Schließmechanismus (10) angeordnet ist;
eine Mutter (14), derart mit dem Gewinde des Zylinders (6) in Eingriff zu bringen, dass ein Festziehen der Mutter (14) entlang des Zylinders (6) dazu führt, dass die Mutter (14) mit der Basis (30) in Eingriff tritt, um somit das Schloss (2) bezogen auf die Basis (30) in Position zu halten;
**dadurch gekennzeichnet, dass** die Basis (30) nachgiebig verformbar ist und einen Vorsprung (32) umfasst, der sich von der Basis (30) aus erstreckt; und die Mutter (14) eine Rastung (20) umfasst, die mit dem Vorsprung (32) in Eingriff zu bringen ist.

2. Schlossanordnung (200) nach Anspruch 1, wobei die Rastung (20) in einer ersten Drehrichtung einen größeren Widerstand gegen eine Bewegung der Mutter (14) bietet als in einer entgegengesetzten Drehrichtung.

3. Schlossanordnung (200) nach einem der vorhergehenden Ansprüche, wobei die Rastung (20) eine Nocke aufweist und der Vorsprung (32) einen Nockenstößel aufweist.

4. Schlossanordnung (200) nach einem der vorhergehenden Ansprüche, wobei die Rastung (20) eine Schräge (22) aufweist, die sich von einer Oberfläche (16) der Mutter (14) aus erstreckt.

5. Schlossanordnung (200) nach einem der vorhergehenden Ansprüche, mehrere Vorsprünge (32) umfassend.

6. Schlossanordnung (200) nach einem der vorhergehenden Ansprüche, mehrere Rastungen (20) umfassend.

7. Schlossanordnung (200) nach einem der vorhergehenden Ansprüche, drei gleichmäßig voneinander beabstandete Rastungen (20) umfassend.

8. Schlossanordnung nach einem der vorhergehenden Ansprüche, wobei die Basis (30) zwei Vorsprünge (32) umfasst, die voneinander um einen Abstand beabstandet sind, der geringer ist als der Durchmesser der Mutter (14), wobei diese Vorsprünge (32) im Wesentlichen einander diametral entgegengesetzt angeordnet sind.

## Revendications

1. Ensemble de serrure (200) comprenant :
une serrure (2) comprenant :
un barillet (6) ;
un mécanisme de fermeture (10) ; et
une tête (8) ;
un support (30) adapté pour recevoir la serrure, de telle sorte que, durant l'utilisation, le support (30) soit positionné entre la tête (8) et le mécanisme de fermeture (10) ;
un écrou (14) pouvant être mis en prise par vissage avec le barillet (6), de telle sorte que le serrage de l'écrou (14) le long du barillet (6) entraîne la mise en prise de l'écrou (14) avec le support (30) pour ainsi retenir la serrure (2) en place par rapport au support (30) ;
**caractérisé en ce que** le support (30) est déformable élastiquement et comprend une protubérance (32) s'étendant depuis le support (30) ; et l'écrou (14) comprend un cran (20) pouvant être mis en prise avec la protubérance (32).

2. Ensemble de serrure (200) selon la revendication 1, dans lequel le cran (20) offre une plus grande résistance au mouvement de l'écrou (14) dans un premier sens que dans un sens opposé.

3. Ensemble de serrure (200) selon l'une quelconque des revendications précédentes, dans lequel :
le cran (20) comprend une came et la protubérance (32) comprend un galet de came.

4. Ensemble de serrure (200) selon l'une quelconque des revendications précédentes, dans lequel le cran (20) comprend une rampe (22) s'étendant depuis une surface (16) de l'écrou (14).

5. Ensemble de serrure (200) selon l'une quelconque des revendications précédentes, comprenant une pluralité de protubérances (32).

6. Ensemble de serrure (200) selon l'une quelconque des revendications précédentes, comprenant une pluralité de crans (20).

7. Ensemble de serrure (200) selon l'une quelconque des revendications précédentes, comprenant trois crans (20) équidistants les uns des autres.

8. Ensemble de serrure selon l'une quelconque des revendications précédentes, dans lequel le support (30) comprend deux protubérances (32) espacées l'une de l'autre par une distance qui est inférieure au diamètre de l'écrou (14), lesquelles protubérances (32) étant des positions opposées sensiblement diamétralement l'une à l'autre.
